# EUROPEAN PATENT SPECIFICATION

(11) **EP 3 299 104 B1**
(45) Date of publication and mention of the grant of the patent: **21.07.2021**
(21) Application number: 16795744.8
(22) Date of filing: 29.03.2016
(51) Int. Cl.: B23D 36/00, B23D 15/06, B21B 37/26, B21B 15/00

(54) **EQUIPMENT FOR AUTOMATIC SHEARING OF COLD-ROLLED VARIABLE THICKNESS PLATE, AND SHEARING METHOD BASED ON SAME**
VORRICHTUNG ZUM AUTOMATISCHEN SCHERSCHNEIDEN VON KALTGEWALZTEN PLATTEN MIT VARIABLER DICKE UND DARAUF BASIERENDES SCHERSCHNEIDVERFAHREN
ÉQUIPEMENT DE CISAILLEMENT AUTOMATIQUE DE TÔLE LAMINÉE À FROID D'ÉPAISSEUR VARIABLE, ET PROCÉDÉ DE CISAILLEMENT FAISANT APPEL À CELUI-CI

(30) Priority: 20.05.2015 CN 201510259523
(43) Date of publication of application: 28.03.2018
(73) Proprietor: Baoshan Iron & Steel Co., Ltd., Shanghai 201900 (CN)
(72) Inventor: XIONG, Fei, Shanghai 201900 (CN); LI, Shanqing, Shanghai 201900 (CN); JIANG, Zhenglian, Shanghai 201900 (CN)
(74) Representative: Kuhnen & Wacker Patent- und Rechtsanwaltsbüro PartG mbB
(86) International application number: PCT/CN2016/077614
(87) International publication number: WO 2016/184257

(56) References cited:
- CN-A- 101 032 725
- CN-A- 101 032 725
- CN-A- 101 811 182
- CN-A- 104 551 538
- CN-A- 104 551 538
- CN-A- 105 772 505
- DE-A1- 2 930 005
- US-A- 3 357 087

## Description

### Technical field

The present invention relates to an automatic shearing device for a cold-rolled plate of variable thickness according to the preamble of claim 1 and to a method for using said automatic shearing device according to the preamble of claim 1. An example of such a device and of such a method are disclosed by CN 104551538A.

### Background Art

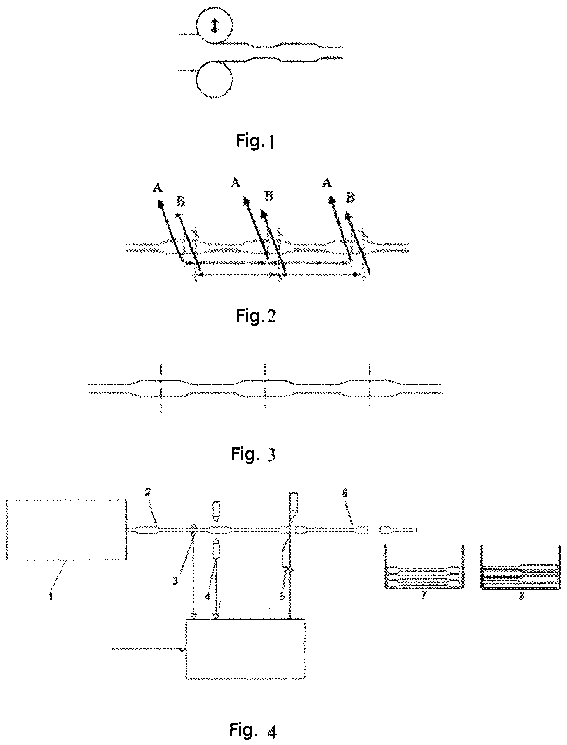

In order to achieve the goal of automobile lightweight, the current automobile industry is promoting the use of a strip material which continuously varies in thickness - a plate of variable thickness - obtained by rolling, as shown in Figure 1. This type of plate of variable thickness can be rolled in a single sheet manner or roll manner, and rolling in a roll manner is more efficient, but has a positioning requirement for subsequent shearing.

In order to facilitate the rolling control, the set outlet thickness profile is periodic. Periodic changes in the thickness of the strip material cause the subsequent shearing to also have a certain regularity.

The existing cross shearing units all have a function of cutting to length, that is, the units can give plates of equal length by cutting to length in accordance with the data input by an operator. This function satisfies the shearing of rolls of equal thickness, but for strip materials with periodically varying thickness, only shearing in equal length is not possible to shear out a plate that meets the requirements. As shown in figure 2, position A is the required shearing point. If the position of the shears controlled by the shearing unit is at B, although the requirement for a sample piece of a length of L is also satisfied, the sheared sample plate is unusable. Therefore, during shearing, it is necessary to be able to identify and track the profile of the thickness of the strip material that needs to be sheared and to control the shears to fall at the set shearing position; and it is necessary to be able to identify whether the sheared sample plate meets the finished product requirements and to distinguish same during stacking.

Patent EP 0937521 A2 is a patent relating to straightening of a plate of continuously variable thickness. A control system triggers a straightening roller action according to the marking holes carried by supplied materials and used for marking the head and the tail of each period of profile. It can be seen that after the variable thickness rolling, the strip material will be marked at the head to tail position of each profile period. The patent is only directed to straightening of a plate of continuously variable thickness, and does not mention shearing.

Patent application 201410828752.7 (later published as CN105772505A) also mentions marking a strip material at an outlet of a roll gap and identifying the mark during shearing, but does not mention an implementation method for shearing.

### Summary of the Invention

The invention proposes an automatic shearing method for a cold-rolled plate of variable thickness, which can efficiently and accurately shear rolls of supplied materials of continuously variable thickness into plates of continuously variable thickness which can be directly used by a user, as shown in Figure 3.

In order to achieve the above object, the technical solutions of the present invention are as follows:
An automatic shearing apparatus for a cold-rolled plate of variable thickness is provided, which comprises the features defined in claim 1.

A method for automatic shearing using the above-mentioned automatic shearing apparatus for a cold-rolled plate of variable thickness is provided in claim 2.

The beneficial effects of the invention mainly lie in that the apparatus and the method can efficiently and accurately shear rolls of supplied materials of continuously variable thickness into a plates of continuously variable thickness which can be directly used by a user.

### Brief Description of the Drawings

Figure 1 is a schematic view of variable thickness rolling;
Figure 2 is a schematic view of shearing position deviations;
Figure 3 is a schematic view of setting a target profile for variable thickness rolling;
Figure 4 is an automatic shearing method
Figure 5 is an automatic shearing method provided in embodiment 1;
Figure 6 is an arrangement view of a variable thickness rolling machine frame;
Figure 7 is a schematic view of a rolled strip material;
Figure 8 is a schematic view of a sample piece.
In the figures: 1. a straightening device; 2: a strip material; 3. a length-measuring device; 4. a thickness gauge; 5. shears; 6. a plate; 7. a finished stack; 8. a waste stack; 9. a mark identification device; 10. rollers; 12. a left recoiling machine; 12. a left thickness gauge; 13. a right recoiling machine; 14. a right thickness gauge; 15. a labeller; 16. a left velocimeter; and 17. a right velocimeter.

### Detailed Description of Embodiments

Figure 2 shows the set rolled profile of a strip material that needs to be rolled. For the convenience of rolling mill control, the rolled profile is often set in a periodic form.

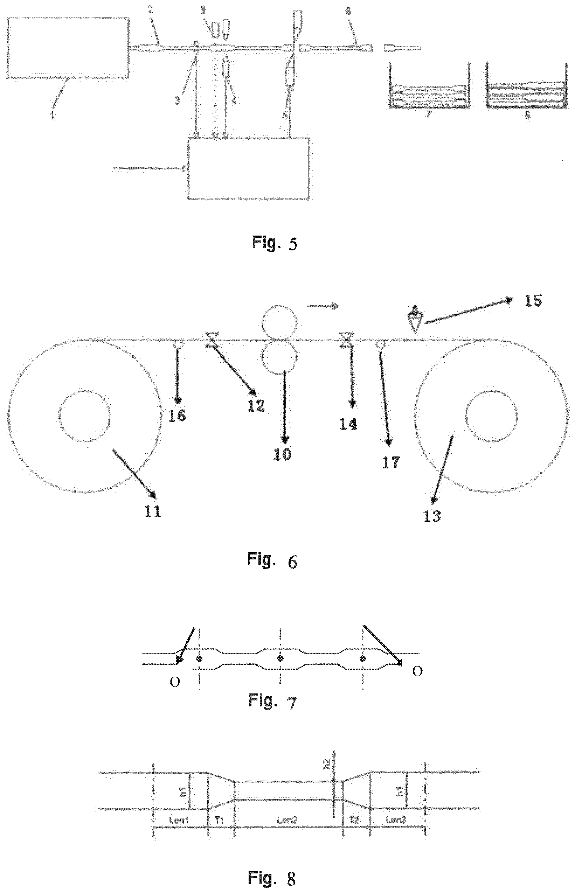

Figure 6 is a schematic view of the arrangement of a rolling mill for achieving rolling. Marking equipment is arranged at an outlet of the roll gap of the rolling mill. The control system will make a mark O at the head to tail position of each set period according to the measurement result of the length-measuring device. The mark can be made using a mechanical, laser or color spraying method. 10. rollers; 11. a left recoiling machine; 12. a left thickness gauge; 13. a right recoiling machine; 14. a right thickness gauge; 15. a labeller; 16. a left velocimeter; and 17. a right velocimeter.

As shown in Figure 7, the rolled strip material has a mark used for identification at the head to tail position of each set period.

### Example 1

The structure of an automatic shearing apparatus for a cold-rolled plate of variable thickness provided in this example not falling under the claims is shown in figure 4, and includes: a control device, and a straightening device 1, a length-measuring device 3, a thickness gauge 4 and shears 5 arranged successively, wherein the length-measuring device 3, the thickness gauge 4 and the shears 5 are controlled by the control device.

A shearing method based on this example comprises that: the thickness gauge 4 is arranged in front of the shears 5 and the length-measuring device 3 is arranged in front of the thickness gauge; and the control system identifies the profile of a strip material passing through the thickness gauge according to length tracing data and measured thickness values, and determines the position of the strip material at the shears. At the beginning of shearing, the head of the strip passes through the shears, and at this time, the size is often far from the set profile and therefore, the control system will control the action time of the shears according to the length of the waste materials to be sheared, and stack the sheared plate into the waste stack; and when the control system identifies that the profile of the strip material is coincident with the set profile, and the set shearing position has reached the shears, the control system will give a shearing command, and the sheared plate will be stacked into the finished stack.

### Embodiment 1

The structure of an automatic shearing apparatus for a cold-rolled plate of variable thickness provided in this embodiment is shown in Figure 5, which differs from that of the above example in that: the automatic shearing apparatus for a cold-rolled plate of variable thickness further comprises a mark detector, which is arranged between the length-measuring device and the thickness gauge and is controlled by the control device.

The difference between this method and method 1 lies in making a determination using the mark made on the strip material 2 during rolling (as shown in Figure 7). Therefore, the thickness gauge 4 is arranged in front of the shears 5, the length-measuring device 3 is arranged in front of the thickness gauge and a mark identification device 9 is arranged behind the length-measuring device. At the beginning of shearing, the head of the strip passes through the shears, the mark of a shearing point does not appear on the strip material 2 and the control system will control the action time of the shears according to the length of the waste materials to be sheared, and stack the sheared plate into the waste stack; when the mark of a shearing point appears on the strip material, the control system determines the shearing position according to the strip steel mark identified by the mark identification device 9, tracks same to the shearing position and controls the action of the shears, and at the same time, determines whether this piece of strip steel satisfies the dimensional accuracy according to length tracing data and measured thickness values, and determines whether the sheared plate 6 is stacked into the finished product stack or the waste stack.

### Application example

A target profile for variable thickness rolling is set as follows---
thickness: *h*1 = 2.0 *mm*, *h*2 = 1.0 *mm*;
length: *Len*1 = 250 *mm*, *T*1 = 100 *mm*, *Len*2 = 500 *mm,* 72 = 100 *mm*, *Len*3 = 250 *mm.*

Two automatic shearing strategies are introduced below---
before a steel roll enters the shearing unit, the above profile setting data are input to the control system, and this is a sample piece containing three sections of equal thickness (a thickness of 2.0/1.0/2.0 mm, a length of 250/500/250 mm) and two transition sections (a length of 100/100 mm), so the length of a piece is:
After that, the following two solutions can be used for automatic shearing:

### 1) Method I

as shown in Figure 4, the length-measuring device 3 and the thickness gauge 4 are arranged in front of the shears 5.

The control system measures a strip material that has been flattened and determines the profile of the strip material passing through the thickness gauge according to the length tracking data and measured thickness values (the key is to determine the positions of 1, 2, 3 and 4 inflection points in figure 8), and the position of the strip material at the shears, and at the same time, compares the profile with the input set profile and determines the action time of the shears.

The basic principle of shearing is that if it is measured that the above inflection points do not appear on the length of a piece, or if the above inflection point does not appear completely, the piece is sheared and stacked into the waste stack 8; otherwise, the thickness and length of each section are compared with the set quantitative values, and the sample pieces within an error range are stacked into the finished product stack 7, and the sample pieces outside the error range are stacked into the waste stack 8.

### 2) Method II

Referring to figure 5, the difference between this method and the method 1 lies in making a determination using the mark made on a strip steel during rolling (see Figure 7). Therefore, the mark identification device 9, the length-measuring device 3 and the thickness gauge 4 are arranged in front of the shears 5, and the control system determines the shearing position according to a mark of the strip steel identified by the mark identification device 9.

This method is simpler and the control system controls the shears to fall at the mark position. At the same time, the control system also identifies the positions of 1, 2, 3, and 4 inflection points in figure 8, and the thickness and length of each section are compared with the set quantitative values, and the sample pieces within an error range are stacked into the finished product stack 7, and the sample pieces outside the error range are stacked into the waste stack 8.

Both of the above-mentioned methods use a special algorithm for identifying the inflection points.

In summary, the embodiments are only preferred embodiments of the present invention and are not intended to limit the implementation scope of the invention.

## Claims

1. An automatic shearing apparatus for a cold-rolled plate of variable thickness, comprising: a control device, and a straightening device (1), a length-measuring device (3), a thickness gauge (4) and shears (5) arranged successively, wherein the length-measuring device (3), the thickness gauge (4) and shears (5) are controlled by the control device, and a strip material (2) passes through the straightening device (1), is then successively subjected to a length measurement in the length-measuring device (3) and a thickness measurement in the thickness gauge (4), and is then sheared by the shears (5); **characterized by** further comprising mark detector (9), which is arranged between the length-measuring device (3) and the thickness gauge (4) and is controlled by the control device.

2. A method for automatic shearing using the automatic shearing apparatus for a cold-rolled plate of variable thickness of claim 1, **characterized by** comprising the steps:
the thickness gauge (4) is arranged in front of the shears (5), and the length-measuring device (3) is arranged in front of the thickness gauge (4), and a mark identification device (9) is arranged behind the length-measuring device (3); a control system determines a shearing position according to a strip steel mark identified by the mark identification device (9), identifies the profile of a strip material (2) passing through the thickness gauge (4) according to length tracing data and measured thickness values, and determines the position of the strip material (2) at the shears (5), and simultaneously compares the profile with the set profile of a plate of continuously variable thickness, and determines whether the strip steel (2) meets dimensional accuracy, and decides the action time of the shears (5); and at the same time, the control device also determines whether the sheared plate is stacked into the finished product stack (7) or the waste stack (8).

## Patentansprüche

1. Automatische Abschervorrichtung für eine kaltgewalzte Platte mit einer variablen Dicke, aufweisend: eine Steuerungsvorrichtung und eine Begradigungsvorrichtung (1), eine Längenmessvorrichtung (3), ein Dickenmessgerät (4) und nacheinander angeordnete Scheren (5), wobei die Längenmessvorrichtung (3), das Dickenmessgerät (4) und die Scheren (5) durch die Steuerungsvorrichtung gesteuert werden, und ein Bandmaterial (2) durch die Begradigungsvorrichtung (1) bewegt wird, und dann nacheinander einer Längenmessung in der Längenmessvorrichtung (3) und einer Dickenmessung in dem Dickenmessgerät (4) unterzogen wird, und dann durch die Scheren (5) abgeschert wird; **dadurch gekennzeichnet, dass** die Vorrichtung ferner folgende Merkmale aufweist:
einen Markierungsdetektor (9), der zwischen der Längenmessvorrichtung (3) und dem Dickenmessgerät (4) angeordnet ist und durch die Steuerungsvorrichtung gesteuert wird.

2. Verfahren für ein automatisches Abscheren unter Verwendung der automatischen Abschervorrichtung für eine kaltgewalzte Platte mit einer variablen Dicke nach Anspruch 1, **dadurch gekennzeichnet, dass** das Verfahren folgende Schritte beinhaltet:
das Dickenmessgerät (4) ist vor den Scheren (5) angeordnet, und die Längenmessvorrichtung (3) ist vor dem Dickenmessgerät (4) angeordnet, wobei eine Markierungserkennungsvorrichtung (9) hinter der Längenmessvorrichtung (3) angeordnet ist; ein Steuerungssystem bestimmt eine Abscherposition gemäß einer Bandstahlmarkierung, die durch die Markierungserkennungsvorrichtung (9) erkannt wird, erkennt das Profil eines Bandmaterials (2), das durch das Dickenmessgerät (4) gemäß Längenverfolgungsdaten und Dickenmesswerten bewegt wird, und bestimmt die Position des Bandmaterials (2) an den Scheren (5), und vergleicht gleichzeitig das Profil mit dem Sollprofil einer Platte mit einer kontinuierlich variablen Dicke, und bestimmt, ob der Bandstahl (2) maßhaltig ist, und legt die Arbeitszeit der Scheren (5) fest; wobei gleichzeitig die Steuerungsvorrichtung ferner bestimmt, ob die abgescherte Platte auf den Endproduktstapel (7) oder den Ausschussstapel (8) geschichtet wird.

## Revendications

1. Appareil de cisaillement automatique pour une plaque laminée à froid d'épaisseur variable, comprenant : un dispositif de contrôle, et un dispositif de dressage (1), un dispositif de mesure de longueur (3), une jauge d'épaisseur (4) et des cisailles (5) disposés successivement, dans lequel le dispositif de mesure de longueur (3), la jauge d'épaisseur (4) et les cisailles (5) sont contrôlés par le dispositif de contrôle, et un matériau de bande (2) passe à travers le dispositif de dressage (1), et est ensuite successivement soumis à une mesure de longueur dans le dispositif de mesure de longueur (3) et une mesure d'épaisseur dans la jauge d'épaisseur (4), et est ensuite cisaillé par les cisailles (5) ; **caractérisé en ce qu'**il comprend de plus un détecteur de marque (9), qui est disposé entre le dispositif de mesure de longueur (3) et la jauge d'épaisseur (4) et est contrôlé par le dispositif de contrôle.

2. Procédé pour le cisaillement automatique utilisant l'appareil de cisaillement automatique pour une plaque laminée à froid d'épaisseur variable selon la revendication 1, **caractérisé en ce qu'**il comprend les étapes :
la jauge d'épaisseur (4) est disposée à l'avant des cisailles (5), et le dispositif de mesure de longueur (3) est disposé à l'avant de la jauge d'épaisseur (4), et un dispositif d'identification de marque (9) est disposé derrière le dispositif de mesure de longueur (3) ; un système de contrôle détermine une position de cisaillement selon une marque d'acier de bande identifiée par le dispositif d'identification de marque (9), identifie le profil d'un matériau de bande (2) passant à travers la jauge d'épaisseur (4) selon des données de traçage de longueur et des valeurs d'épaisseur mesurées, et détermine la position du matériau de bande (2) au niveau des cisailles (5), et compare simultanément le profil avec le profil fixé d'une plaque d'épaisseur variable en continu, et détermine si l'acier de bande (2) remplit la précision dimensionnelle, et décide du temps d'action des cisailles (5) ;
et au même moment, le dispositif de contrôle détermine également si la plaque cisaillée est empilée dans la pile de produit fini (7) ou la pile de déchets (8).
